# FASCICULE DE BREVET EUROPEEN

(11) **EP 4 133 017 B1**
(45) Date de publication et mention de la délivrance du brevet: **09.09.2026**
(21) Numéro de dépôt: 21726150.2
(22) Date de dépôt: 12.04.2021
(51) Int. Cl.: C09D 133/12, C08L 53/00, C09D 5/00, C09K 3/16, C08F 220/14

(54) **COMPOSITION À BASE DE POLY(MÉTHACRYLATE DE MÉTHYLE) ANTISTATIQUE OU ANTIPOUSSIÈRE**
ANTISTATISCHE ODER STAUBABWEISENDE POLYMETHYLMETHACRYLATZUSAMMENSETZUNG
ANTISTATIC OR DUST-REPELLENT POLY(METHYL METHACRYLATE) COMPOSITION

(30) Priorité: 10.04.2020 FR 2003632
(43) Date de publication de la demande: 15.02.2023
(73) Titulaire: ARKEMA FRANCE, 92800 Puteaux (FR)
(72) Inventeur: COCQUET, Clio, 27470 SERQUIGNY (FR); ROY, Cédric, 27470 SERQUIGNY (FR); QUERUEL, Sylvain, 27470 SERQUIGNY (FR); REYNA-VALENCIA, Alejandra, 27470 SERQUIGNY (FR)
(74) Mandataire: Arkema Patent
(86) Numéro de dépôt international: PCT/FR2021/050641
(87) Numéro de publication internationale: WO 2021/205134

(56) Documents cités:
- EP-A2- 2 905 699
- US-A1- 2017 335 144
- US-A1- 2019 062 545

## Description

### Domaine de l'invention

La présente invention concerne une composition à base de poly(méthacrylate de méthyle) ainsi que les utilisations de ladite composition.

### Arrière-Plan technique

La formation et la rétention de charges d'électricité statique à la surface de la plupart des matières plastiques sont connues. Dans le cas du poly(méthacrylate de méthyle) (PMMA), au cours du transport des granulés de PMMA notamment, la formation d'électricité statique sur les granulés de PMMA conduit ces granulés à se coller les uns aux autres (rendant leur séparation difficile), et à former un bloc, ce qui rend problématique le déchargement des granulés par exemple. La présence d'électricité statique sur des objets transparents en PMMA peut provoquer l'accumulation de poussières sur ces objets et ainsi gêner leur utilisation et leur apparence esthétique. Au niveau industriel, de la poudre résiduelle de PMMA a aussi tendance à coller sur les pièces usinées. L'accumulation de poussières à la surface de ces objets altère leur transparence.

L'art antérieur a décrit des agents antistatiques tels que des surfactants ioniques du type amines éthoxylées ou sulfonates que l'on ajoute dans des polymères. Cependant les propriétés antistatiques des polymères dépendent de l'humidité ambiante et elles ne sont pas permanentes puisque ces agents migrent à la surface des polymères et disparaissent. Il a alors été proposé comme agents antistatiques des copolymères à blocs polyamides et blocs polyéthers hydrophiles. Ces agents ont l'avantage de ne pas migrer et donc de donner des propriétés antistatiques permanentes et de plus indépendantes de l'humidité ambiante.

Le document EP 2984137 concerne une composition de poly (méthacrylate de méthyle) antistatique transparent (PMMA) comprenant, par rapport au poids total de la composition : de 55 à 99,9% en poids de PMMA ; et de 0,1 à 45% en poids d'au moins un copolymère PEBA ayant des blocs polyamide PA et des blocs polyéther PE comprenant du polyéthylène glycol (PEG), dans lequel ledit copolymère est caractérisé en ce qu'il comprend de 50 à 80% en poids de PEG par rapport au poids total du copolymère.

Il existe un besoin de fournir une composition à base de poly(méthacrylate de méthyle), présentant en même temps des bonnes propriétés antistatiques ou antipoussières ainsi que de bonnes propriétés mécaniques, et de bonnes propriétés de transparence.

### Résumé de l'invention

L'invention concerne en premier lieu une composition comprenant :
- de 85 à 98 % en poids de poly(méthacrylate de méthyle) par rapport au poids de la composition, le poly(méthacrylate de méthyle) présentant un facteur de perte tan δ, correspond au rapport des modules G" et G' mesurés à une température de 220°C et à une fréquence angulaire de 1 rad/sec, supérieur ou égale à 10 ; et
- de 2 à 15 % en poids de copolymère à blocs polyamide et à blocs polyéther par rapport au poids de la composition.

La présente invention permet de répondre au besoin exprimé ci-dessus. Elle fournit plus particulièrement une composition à base de poly(méthacrylate de méthyle), présentant en même temps des bonnes propriétés antistatiques ou antipoussières ainsi que de bonnes propriétés mécaniques, et de bonnes propriétés de transparence.

Cela est accompli grâce en associant du poly(méthacrylate de méthyle) à une teneur de 85 à 98 % en poids par rapport au poids de la composition, le poly(méthacrylate de méthyle) présentant des propriétés viscoélastiques à l'état fondu caractérisées par un facteur de perte tan δ supérieur ou égal à 10, et au moins un copolymère à blocs polyamide et à blocs polyéther à une teneur de 2 à 15 % en poids par rapport au poids total de la composition. Plus particulièrement, il a été découvert que de telles compositions présentent à la fois de bonnes propriétés antistatiques ou antipoussières, et de bonnes propriétés mécaniques (résistance aux chocs, point Vicat...), notamment par rapport à des compositions consistant en du PMMA ou à des compositions présentant un facteur de perte tan δ hors de la gamme revendiquée.

### Description détaillée

L'invention est maintenant décrite plus en détail et de façon non limitative dans la description qui suit.

La composition selon l'invention est de préférence une composition transparente.

Par « *composition transparente* » on entend une composition de transmittance au moins égale à 88% selon la norme ASTM D1003-97/ISO 13468, et de haze (turbidité ou trouble) inférieur à 15 %, de préférence inférieur à 10 %, de préférence inférieur à 5 %, selon la norme ASTM D1003-97, ces 2 propriétés étant mesurées à 560 nm sur une plaque de 2 mm d'épaisseur.

Par « *composition antistatique* » on entend une composition dont la résistivité superficielle (ou surfacique) est inférieure à 10¹² ohm/m² mesurée et supérieure à 10⁹ ohm/m² selon la norme ASTM D257.

Par « *composition antipoussière »* on entend une composition dont la résistivité superficielle (ou surfacique) est supérieure à 10¹² ohm/m², et inférieure à 10¹³ ohm/m² mesurée selon la norme ASTM D257.

### Composition

La composition transparente selon l'invention comprend du poly(méthacrylate de méthyle) (PMMA).

Le terme « PMMA » désigne un homopolymère ou copolymère de méthacrylate de méthyle (MMA) ou leurs mélanges.

Le PMMA est présent dans la composition transparente à une teneur de 85 à 98 % en poids par rapport au poids de la composition. Par exemple, le PMMA peut être présent dans la composition à une teneur de 85 à 88 % ; ou de 88 à 90 % ; ou de 90 à 92 % ; ou de 92 à 94 % ; ou de 94 à 96 % ; ou de 96 à 98 % en poids par rapport au poids de la composition.

Selon certains modes de réalisation, le PMMA comprend un copolymère de MMA.

Selon d'autres modes de réalisation, le PMMA est un mélange d'au moins un homopolymère et d'au moins un copolymère de MMA, ou un mélange d'au moins deux copolymères de MMA ayant une masse molaire moyenne différente, ou un mélange d'au moins deux copolymères de MMA ayant une composition de monomères différente.

Le copolymère de MMA peut comprendre de 60 % à 99,7 % en poids de méthacrylate de méthyle et de 0,3 à 40 % en poids d'au moins un monomère contenant au moins une insaturation éthylénique pouvant copolymériser avec le méthacrylate de méthyle. De préférence, le copolymère de MMA peut comprendre de 70 % à 99 %, avantageusement de 90 % à 95 % et plus avantageusement de 70 % à 90 %, de préférence de 80 % à 90%, ou encore de 85 à 90% en poids de méthacrylate de méthyle et de 1 % à 30 %, avantageusement de 5 % à 30 % et plus avantageusement de 10 % à 30 % en poids d'au moins un monomère contenant au moins une insaturation éthylénique qui peut copolymériser avec le méthacrylate de méthyle.

Préférablement, ce monomère contenant au moins une insaturation éthylénique qui peut copolymériser avec le méthacrylate de méthyle est un monomère (méth)acrylique. Le monomère (méth)acrylique est choisi parmi le l'acide acrylique, l'acide méthacrylique, les monomères acryliques d'alkyle, les monomères méthacryliques d'alkyle et leurs mélanges. De préférence, le monomère est choisi parmi l'acide acrylique, l'acide méthacrylique, les monomères acryliques d'alkyle, les monomères méthacryliques d'alkyle et leurs mélanges, le groupe alkyle contenant de 1 à 22 atomes de carbone, et étant linéaire, ramifié ou cyclique ; le groupe alkyle contenant de préférence 1 à 12 atomes de carbone, et étant linéaire, ramifié ou cyclique. Plus préférablement le monomère (méth)acrylique est choisi parmi méthacrylate d'éthyle, l'acrylate de méthyle, l'acrylate d'éthyle, l'acide méthacrylique, l'acide acrylique, l'acrylate de n-butyle, l'acrylate d'isobutyle, le méthacrylate de n-butyle, le méthacrylate d'isobutyle, l'acrylate de cyclohexyle, le méthacrylate de cyclohexyle, l'acrylate d'isobornyle, le méthacrylate d'isobornyle et leurs mélanges.

Avantageusement le monomère (méth)acrylique est choisi parmi les (méth)acrylates d'alkyle dans lesquels le groupe alkyle contient de 1 à 12 atomes de carbone. À titre d'exemple, on peut mentionner l'acrylate de méthyle et le (méth)acrylate d'éthyle, de butyle ou de 2-éthylhexyle De préférence, le comonomère est un acrylate d'alkyle dans lequel le groupe alkyle comprend de 1 à 4 atomes de carbone.

Plus avantageusement, le monomère (méth)acrylique est choisi parmi le méthacrylate de méthyle, l'acrylate de méthyle, l'acrylate d'éthyle, et/ou leurs mélanges.

Le PMMA compris dans la composition selon l'invention peut avoir une masse molaire moyenne en poids de 70 000 g/mol à 160 000 g/mol, et de préférence de 70 000 à 100 000 g/mol.

La masse molaire moyenne en poids est mesurée par chromatographie d'exclusion stérique en utilisant PMMA comme étalon de calibration. Le polymère PMMA est solubilisé dans de l'hexafluoroisopropanol stabilisé avec 0,05 M trifluoroacétate de potassium à une concentration de 1 g/L avant d'être passé sur les colonnes de silice modifiée, par exemple à un débit de 1 mL/min, la masse étant mesurée par l'indice de réfraction.

De plus, le PMMA compris dans la composition selon l'invention présente des propriétés viscoélastiques à l'état fondu caractérisées par un facteur de perte tan δ supérieur ou égal à 10, de préférence supérieur ou égal à 11, encore de préférence supérieur ou égal à 12, encore plus préférentiellement supérieur ou égal à 15. Le PMMA peut notamment présenter un facteur de perte tan δ de 10 à 15 ; ou de 15 à 20 ; ou de 20 à 25 ; ou de 25 à 30 ; ou de 30 à 35 ; ou de 35 à 40 ; ou supérieur à 40. Le facteur de perte tan δ correspond au rapport des modules G" et G' mesurés à une température de 220°C et à une fréquence angulaire de 1 rad/sec. Le module G', appelé *« module de conservation* », caractérise le comportement élastique du matériau (l'énergie conservée et totalement restituée par le matériau). Le module G", appelé « *module de perte ou module de dissipation »,* caractérise le comportement visqueux du matériau (l'énergie dissipée sous forme de chaleur). Ces propriétés rhéologiques sont mesurées à l'aide d'un rhéomètre oscillatoire à plateaux parallèles, selon la norme ISO 6721-10:2015.

La composition selon l'invention comprend également au moins un copolymère à blocs polyamide et à blocs polyéther.

Les copolymères à blocs polyéther et blocs polyamide (en abrégé « *PEBA »)* résultent de la polycondensation de blocs polyamides à extrémités réactives avec des blocs polyéthers à extrémités réactives, tels que, entre autres :
1) des blocs polyamides à bouts de chaîne diamines avec des blocs polyoxyalkylènes à bouts de chaînes dicarboxyliques ;
2) des blocs polyamides à bouts de chaînes dicarboxyliques avec des blocs polyoxyalkylènes à bouts de chaînes diamines, obtenus par exemple par cyanoéthylation et hydrogénation de blocs polyoxyalkylène α,ω-dihydroxylées aliphatiques appelées polyétherdiols ;
3) des blocs polyamides à bouts de chaînes dicarboxyliques avec des polyétherdiols, les produits obtenus étant, dans ce cas particulier, des polyétheresteramides.

Les blocs polyamides à bouts de chaînes dicarboxyliques proviennent, par exemple, de la condensation de précurseurs de polyamides en présence d'un diacide carboxylique limiteur de chaîne. Les blocs polyamides à bouts de chaînes diamines proviennent par exemple de la condensation de précurseurs de polyamides en présence d'une diamine limiteur de chaîne.

Les polymères à blocs polyamides et blocs polyéthers peuvent aussi comprendre des motifs répartis de façon aléatoire.

On peut utiliser avantageusement trois types de blocs polyamides.

Selon un premier type, les blocs polyamides proviennent de la condensation d'un diacide carboxylique, en particulier ceux ayant de 4 à 20 atomes de carbone, de préférence ceux ayant de 6 à 18 atomes de carbone et d'une diamine aliphatique ou aromatique, en particulier celles ayant de 2 à 20 atomes de carbone, de préférence celles ayant de 6 à 14 atomes de carbone.

A titre d'exemples d'acides dicarboxyliques, on peut citer l'acide 1,4-cyclohexyldicarboxylique, les acides butanedioïque, adipique, azélaïque, subérique, sébacique, dodécanedicarboxylique, octadécanedicarboxylique et les acides téréphtalique et isophtalique, mais aussi les acides gras dimérisés.

A titre d'exemples de diamines, on peut citer la tétraméthylène diamine, l'hexaméthylènediamine, la 1,10-décaméthylènediamine, la dodécaméthylènediamine, la triméthylhexaméthylène diamine, les isomères des bis-(4-aminocyclohexyl)-méthane (BACM), bis-(3-méthyl-4-aminocyclohexyl)méthane (BMACM), et 2-2-bis-(3-méthyl-4-aminocyclohexyl)-propane (BMACP), et paraamino-di-cyclo-hexyl-méthane (PACM), et l'isophoronediamine (IPDA), la 2,6-bis-(aminométhyl)-norbornane (BAMN) et la pipérazine (Pip).

Avantageusement, des blocs PA 4.12, PA 4.14, PA 4.18, PA 6.10, PA 6.12, PA 6.14, PA 6.18, PA 9.12, PA 10.10, PA 10.12, PA 10.14 et PA 10.18 sont utilisés. Dans la notation PA X.Y, X représente le nombre d'atomes de carbone issu des résidus de diamine, et Y représente le nombre d'atomes de carbone issu des résidus de diacide, de façon conventionnelle.

Selon un deuxième type, les blocs polyamides résultent de la condensation d'un ou plusieurs acides α,ω-aminocarboxyliques et/ou d'un ou plusieurs lactames ayant de 6 à 12 atomes de carbone en présence d'un diacide carboxylique ayant de 4 à 12 atomes de carbone ou d'une diamine. A titre d'exemples de lactames, on peut citer le caprolactame, l'oenantholactame et le lauryllactame. A titre d'exemples d'acide α,ω-amino carboxylique, on peut citer les acides aminocaproïque, amino-7-heptanoïque, amino-11-undécanoïque et amino-12-dodécanoïque.

Avantageusement les blocs polyamides du deuxième type sont en polyamide 11, en polyamide 12 ou en polyamide 6. Dans la notion PA X, X représente le nombre d'atomes de carbone issus des résidus d'aminoacide.

Selon un troisième type, les blocs polyamides résultent de la condensation d'au moins un acide α,ω-aminocarboxylique (ou un lactame), au moins une diamine et au moins un diacide carboxylique.

Dans ce cas, on prépare, les blocs polyamide PA par polycondensation :
- de la ou des diamines aliphatiques linéaires ou aromatiques ayant X atomes de carbone ;
- du ou des diacides carboxyliques ayant Y atomes de carbone ; et
- du ou des co-monomères {Z}, choisis parmi les lactames et les acides α,ω-aminocarboxyliques ayant Z atomes de carbone et les mélanges équimolaires d'au moins une diamine ayant X1 atomes de carbone et d'au moins un diacide carboxylique ayant Y1 atomes de carbones, (X1, Y1) étant différent de (X, Y),
- ledit ou lesdits co-monomères {Z} étant introduits dans une proportion pondérale allant jusqu'à 50 %, de préférence jusqu'à 20 %, encore plus avantageusement jusqu'à 10 % par rapport à l'ensemble des monomères précurseurs de polyamide ;
- en présence d'un limiteur de chaîne choisi parmi les diacides carboxyliques ; avantageusement, on utilise comme limiteur de chaîne le diacide carboxylique ayant Y atomes de carbone, que l'on introduit en excès par rapport à la stœchiométrie de la ou des diamines.

Selon une variante de ce troisième type, les blocs polyamides résultent de la condensation d'au moins deux acides α,ω-aminocarboxyliques ou d'au moins deux lactames ayant de 6 à 12 atomes de carbone ou d'un lactame et d'un acide aminocarboxylique n'ayant pas le même nombre d'atomes de carbone en présence éventuelle d'un limiteur de chaîne. A titre d'exemple d'acide α,ω-amino carboxylique aliphatique, on peut citer les acides aminocaproïques, amino-7-heptanoïque, amino-11-undécanoïque et amino-12-dodécanoïque. A titre d'exemple de lactame, on peut citer le caprolactame, l'oenantholactame et le lauryllactame. A titre d'exemple de diamines aliphatiques, on peut citer l'hexaméthylènediamine, la dodécaméthylènediamine et la triméthylhexaméthylène diamine. A titre d'exemple de diacides cycloaliphatiques, on peut citer l'acide 1,4-cyclohexyldicarboxylique. A titre d'exemple de diacides aliphatiques, on peut citer les acides butane-dioïque, adipique, azélaïque, subérique, sébacique, dodécanedicarboxylique, les acides gras dimérisés (ces acides gras dimérisés ont de préférence une teneur en dimère d'au moins 98 % ; de préférence ils sont hydrogénés ; ils sont commercialisés sous la marque "PRIPOL" par la société "UNICHEMA", ou sous la marque EMPOL par la société HENKEL) et les polyoxyalkylènes α,ω-diacides. A titre d'exemple de diacides aromatiques, on peut citer les acides téréphtalique (T) et isophtalique (I). A titre d'exemple de diamines cycloaliphatiques, on peut citer les isomères des bis-(4-aminocyclohexyl)-méthane (BACM), bis-(3-méthyl-4-aminocyclohexyl)méthane (BMACM), et 2-2-bis-(3-méthyl-4-aminocyclohexyl)-propane(BMACP), et para-amino-di-cyclo-hexyl-méthane (PACM). Les autres diamines couramment utilisées peuvent être l'isophoronediamine (IPDA), la 2,6-bis-(aminométhyl)-norbornane (BAMN) et la pipérazine.

A titre d'exemples de blocs polyamides du troisième type, on peut citer les suivants :
- le PA 6.6/6 dans laquelle 6.6 désigne des motifs hexaméthylènediamine condensée avec l'acide adipique et 6 désigne des motifs résultant de la condensation du caprolactame.
- le PA 6.6/6.10/11/12 dans laquelle 6.6 désigne l'hexaméthylènediamine condensée avec l'acide adipique ; 6.10 désigne l'hexaméthylènediamine condensée avec l'acide sébacique ; 11 désigne des motifs résultant de la condensation de l'acide aminoundécanoïque ; et 12 désigne des motifs résultant de la condensation du lauryllactame.

Les notations PA X/Y, PA X/Y/Z, etc. se rapportent à des copolyamides dans lesquels X, Y, Z, etc. représentent des unités homopolyamides telles que décrites ci-dessus.

Avantageusement, ledit au moins un bloc polyamide du(des) copolymère(s) utilisé(s) dans la composition de l'invention comprend au moins un des monomères de polyamide suivants: 6, 11, 12, 5.4, 5.9, 5.10, 5.12, 5.13, 5.14, 5.16, 5.18, 5.36, 6.4, 6.9, 6.10, 6.12, 6.13, 6.14, 6.16, 6.18, 6.36, 10.4, 10.9, 10.10, 10.12, 10.13, 10.14, 10.16, 10.18, 10.36, 10.T, 12.4, 12.9, 12.10, 12.12, 12.13, 12.14, 12.16, 12.18, 12.36, 12.T et leurs mélanges ou copolymères ; et de préférence choisi parmi les monomères de polyamide suivants: 6, 11, 12, 6.10, 10.10, 10.12, et leurs mélanges ou copolymères.

De préférence, les blocs polyamide comprennent au moins 30 %, de préférence au moins 50%, de préférence au moins 75 %, de préférence 100 %, en poids de PA 11 ou PA 12 sur le poids total de blocs polyamide.

Les blocs polyéthers peuvent représenter 50 à 80 % en poids du copolymère à blocs polyamides et polyéthers.

Les blocs polyéthers peuvent notamment être des blocs issus de PEG (polyéthylène glycol) c'est à dire constitués de motifs oxyde d'éthylène, et/ou des blocs issus de PPG (propylène glycol) c'est à dire constitués de motifs oxyde de propylène, et/ou des blocs issus de PO3G (polytriméthylène glycol) c'est-à-dire constitués de motifs polytriméthylène éther de glycol, et/ou des blocs issus de PTMG c'est à dire constitués de motifs tétraméthylène de glycol appelés aussi polytétrahydrofurane. Les copolymères PEBA peuvent comprendre dans leur chaîne plusieurs types de polyéthers, les copolyéthers pouvant être à blocs ou statistiques.

Dans le cadre de la présente invention, il est préférable que le copolymère PEBA comprenne des blocs PEG, éventuellement combinés à des blocs PPG, des blocs PO3G, et/ou des blocs PTMG.

Ainsi, selon certains modes de réalisation, le copolymère PEBA comprend des blocs de PEG. Ces blocs peuvent être présents dans le copolymère PEBA à une teneur de 50 à 80 %, de préférence de 55 à 75 %, et encore de préférence de 60 à 70 % en poids par rapport au poids du copolymère. Par exemple, cette teneur peut être de 50 à 55 % ; ou de 55 à 60 % ; ou de 60 à 65 % ; ou de 65 à 70 % ; ou de 70 à 75 % ; ou de 75 à 80 % en poids par rapport au poids du copolymère.

Avantageusement, le copolymère de la composition peut comprendre en outre au moins un polyéther autre que le PEG, choisi parmi le polypropylène glycol(PPG), le polytriméthylène glycol(PO3G), le polytétraméthylène glycol(PTMG) et leurs mélanges.

On peut également utiliser des blocs obtenus par oxyéthylation de bisphénols, tels que par exemple le bisphénol A. Ces derniers produits sont décrits dans le brevet EP613919.

Les blocs polyéthers peuvent aussi être constitués d'amines primaires éthoxylées. A titre d'exemple d'amines primaires éthoxylées on peut citer les produits de formule : 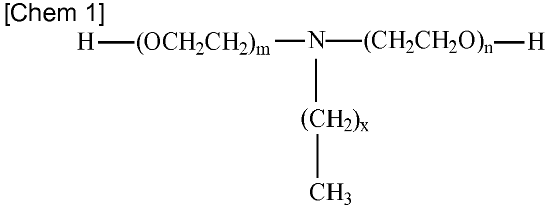 dans laquelle m et n sont compris entre 1 et 20 et x entre 8 et 18. Ces produits sont disponibles dans le commerce sous la marque NORAMOX^{®} de la société ARKEMA et sous la marque GENAMIN^{®} de la société CLARIANT.

Les blocs souples polyéthers peuvent comprendre des blocs polyoxyalkylène à bouts de chaînes NH₂, de tels blocs pouvant être obtenus par cyanoacétylation de blocs polyoxyalkylène α,ω-dihydroxylés aliphatiques appelées polyétherdiols. Plus particulièrement, on pourra utiliser les Jeffamines (par exemple Jeffamine^{®} D400, D2000, ED 2003, XTJ 542, produits commerciaux de la société Huntsman, également décrites dans les documents de brevets JP2004346274, JP2004352794 et EP1482011).

Les blocs polyétherdiols sont soit utilisés tels quels et copolycondensés avec des blocs polyamides à extrémités carboxyliques, soit ils sont aminés pour être transformés en polyéther diamines et condensés avec des blocs polyamides à extrémités carboxyliques. La méthode générale de préparation en deux étapes des copolymères PEBA ayant des liaisons ester entre les blocs PA et les blocs PE est connue et est décrite, par exemple, dans le brevet français FR2846332. La méthode générale de préparation des copolymères PEBA de l'invention ayant des liaisons amide entre les blocs PA et les blocs PE est connue et décrite, par exemple dans le brevet européen EP1482011. Les blocs polyéther peuvent être aussi mélangés avec des précurseurs de polyamide et un limiteur de chaîne diacide pour faire les polymères à blocs polyamides et blocs polyéthers ayant des motifs répartis de façon statistique (procédé en une étape).

Bien entendu, la désignation PEBA dans la présente description de l'invention se rapporte aussi bien aux PEBAX^{®} commercialisés par Arkema, aux Vestamid^{®} commercialisés par Evonik^{®}, aux Grilamid^{®} commercialisés par EMS, qu'aux Pelestat^{®} type PEBA commercialisés par Sanyo ou à tout autre PEBA d'autres fournisseurs.

Avantageusement, les copolymères PEBA peuvent avoir des blocs polyamide en PA 6, en PA 11, en PA 12, PA 6.12, en PA 6.6/6, en PA 10.10 et/ou en PA 6.14, de préférence des blocs PA 11 et/ou PA 12 ; et des blocs polyéther en PEG.

Des copolymères PEBA particulièrement préférés dans le cadre de l'invention sont les copolymères comportant des blocs :
- PA 11 et issus de PEG ;
- PA 12 et issus de PEG ;
- PA 10.10 et issus de PEG ;
- PA 10.12 et issus de PEG ;
- PA 6.12 et issus de PEG ;
- PA 6 et issus de PEG.

De préférence, un copolymère PEBA préféré dans le cadre de l'invention est le copolymère comportant des blocs PA 11 ou PA 12 et des blocs issus de PEG.

En d'autres termes, le copolymère selon l'invention peut comprendre au moins un PEBA choisi parmi : PA 6-PEG, PA 11-PEG, PA 12-PEG, PA 10.10-PEG, PA 10.12-PEG, PA 6.12-PEG et leurs mélanges ; et de préférence comprend, ou mieux est du PA11-PEG ou PA12-PEG.

Si les copolymères à blocs décrits ci-dessus comprennent généralement au moins un bloc polyamide et au moins un bloc polyéther, la présente invention couvre également tous les copolymères comprenant deux, trois, quatre (voire plus) blocs différents choisis parmi ceux décrits dans la présente description, dès lors que ces blocs comportent au moins des blocs polyamides et polyéthers.

Avantageusement, l'alliage de copolymère selon l'invention comprend un copolymère segmenté à blocs comprenant trois types de blocs différents (nommé « *tribloc »* dans la présente description de l'invention), qui résultent de la condensation de plusieurs des blocs décrits ci-dessus. Ledit tribloc est de préférence choisi parmi les copolyétheresteramides, les copolyétheramideuréthanes, dans le(s)quel(s) :
- le pourcentage massique en blocs polyamide est supérieure à 10% ;
- le pourcentage massique en blocs PEG est supérieur à 50% ;
sur la masse totale de tribloc.

La masse molaire moyenne en nombre des blocs polyamides dans le copolymère PEBA vaut de préférence de 400 à 20000 g/mol, plus préférentiellement de 500 à 10000 g/mol, encore plus préférentiellement de 200 à 2000 g/mol. Dans des modes de réalisations, la masse molaire moyenne en nombre des blocs polyamides dans le copolymère PEBA vaut de 400 à 1000 g/mol, ou de 1000 à 1500 g/mol, ou de 1500 à 2000 g/mol, ou de 2000 à 2500 g/mol, ou de 2500 à 3000 g/mol, ou de 3000 à 3500 g/mol, ou de 3500 à 4000 g/mol, ou de 4000 à 5000 g/mol, ou de 5000 à 6000 g/mol, ou de 6000 à 7000 g/mol, ou de 7000 à 8000 g/mol, ou de 8000 à 9000 g/mol, ou de 9000 à 10000 g/mol, ou de 10000 à 11000 g/mol, ou de 11000 à 12000 g/mol, ou de 12000 à 13000 g/mol, ou de 13000 à 14000 g/mol, ou de 14000 à 15000 g/mol, ou de 15000 à 16000 g/mol, ou de 16000 à 17000 g/mol, ou de 17000 à 18000 g/mol, ou de 18000 à 19000 g/mol, ou de 19000 à 20000 g/mol.

La masse molaire moyenne en nombre des blocs polyéthers vaut de préférence de 100 à 6000 g/mol, plus préférentiellement de 200 à 3000 g/mol. Dans des modes de réalisations, la masse molaire moyenne en nombre des blocs polyéthers vaut de 100 à 200 g/mol, ou de 200 à 500 g/mol, ou de 500 à 800 g/mol, ou de 800 à 1000 g/mol, ou de 1000 à 1500 g/mol, ou de 1500 à 2000 g/mol, ou de 2000 à 2500 g/mol, ou de 2500 à 3000 g/mol, ou de 3000 à 3500 g/mol, ou de 3500 à 4000 g/mol, ou de 4000 à 4500 g/mol, ou de 4500 à 5000 g/mol, ou de 5000 à 5500 g/mol, ou de 5500 à 6000 g/mol.

La masse molaire moyenne en nombre est fixée par la teneur en limiteur de chaine. Elle peut être calculée selon la relation : ${M}_{n} = {n}_{monomère} x {MW}_{motif de répétition} / {n}_{limiteur de chaîne} + {MW}_{limiter de chaîne}$

Dans cette formule, n_{monomère} représente le nombre de moles de monomère, n_{limiteur de chaîne} représente le nombre de moles de limiteur (par exemple diacide) en excès, MW_{motif de répétition} représente la masse molaire du motif de répétition, et MW_{limiteur de chaîne} représente la masse molaire du limiteur (par exemple diacide) en excès.

La masse molaire moyenne en nombre des blocs polyamides et des blocs polyéthers peut être mesurée avant la copolymérisation des blocs par chromatographie sur gel perméable (GPC).

Le rapport massique des blocs polyamides par rapport aux blocs polyéthers du copolymère PEBA peut notamment valoir de 0,1 à 20. Ce rapport massique peut être calculé en divisant la masse molaire moyenne en nombre des blocs polyamides par la masse molaire moyenne en nombre des blocs polyéthers.

Ainsi, le rapport massique des blocs polyamides par rapport aux blocs polyéthers du copolymère PEBA peut être de 0,1 à 0,2 ; ou de 0,2 à 0,3 ; ou de 0,3 à 0,4 ; ou de 0,4 à 0,5 ; ou de 0,5 à 1 ; ou de 1 à 2 ; ou de 2 à 3 ; ou de 3 à 4 ; ou de 4 à 5 ; ou de 5 à 7 ; ou de 7 à 10 ; ou de 10 à 13 ; ou de 13 à 16 ; ou de 16 à 19 ; ou de 19 à 20.

Des gammes de 2 à 19, et plus spécifiquement de 4 à 10, sont particulièrement préférées.

Le copolymère PEBA est présent dans la composition à une teneur de 2 à 15 %, et de préférence de 5 à 15 % en poids par rapport au poids de la composition. Par exemple, le copolymère PEBA peut être présent dans la composition à une teneur de 2 à 3 % ; ou de 3 à 5 % ; ou de 5 à 7 % ; ou de 7 à 9 % ; ou de 9 à 10 % ; ou de 10 à 11%, ou de 11 à 12%, ou de 12 à 13 % ; ou de 13 à 14 %, ou de 14 à 15% en poids par rapport au poids de la composition.

L'ajout dudit au moins un copolymère PEBA au PMMA est réalisable par tous procédés bien connus de l'homme du métier dans le domaine des polymères, notamment par mélange à sec, ou par malaxage à une température supérieure à la température de transition vitreuse des différents polymères ajoutés, ou par cisaillement à une température sensiblement égale à la température de fluidisation des différents polymères ajoutés, notamment par calandrage, par extrusion, ou encore par mélange en solution.

Avantageusement, la composition de l'invention présente des propriétés antipoussières ou antistatiques, avec une résistivité superficielle (ou surfacique) inférieure ou égale à 10¹⁴ ohm/m², et de préférence de 10¹¹ à 10¹⁴ ohm/m², par exemple de 10¹² à 10¹³ ohm/m².

Toujours avantageusement, cette composition ne nécessite pas, et ne comporte donc pas de sel organique.

Néanmoins, il est possible d'incorporer un sel organique ou un liquide ionique à la composition selon l'invention, pour améliorer encore ses performances antipoussières.

Ainsi, selon certains modes de réalisation, la composition selon l'invention peut comprendre de 0,1 à 10 %, de préférence de 0,1 à 5 %, en poids d'au moins un sel organique à l'état fondu par rapport au poids total de la composition.

Par « *sels organiques »* on entend des sels constitués de cations organiques associés avec des anions inorganiques ou organiques.

Ledit au moins un sel organique peut être ajouté à l'état fondu, c'est à dire lorsque le sel organique est à une température supérieure à sa température de fusion. De préférence, ledit au moins un sel organique a une température de fusion inférieure à 300°C, de préférence inférieure à 200°C, de préférence inférieure à 100°C et constitue alors avantageusement un liquide ionique, de préférence ayant une température de fusion inférieure à 30°C. Certaines propriétés des liquides ioniques sont la non-volatilité (pas de diffusion dans l'atmosphère de composés organiques volatils), l'ininflammabilité (donc faciles à manipuler et à stocker), la stabilité à haute température (jusqu'à 400°C pour certains), la bonne conductivité, et la haute stabilité vis-à-vis de l'eau et de l'oxygène.

Le sel organique peut comprendre au moins un cation comprenant une ou plusieurs des molécules suivantes : ammonium, sulfonium, pyridinium, pyrrolidinium, imidazolium, imidazolinium, phosphonium, lithium, guanidinium, pipéridinium, thiazolium, triazolium, oxazolium, pyrazolium, et leurs mélanges.

De plus, le sel organique peut comprendre au moins un anion comprenant une ou plusieurs des molécules suivantes : les imides, notamment le bis(trifluorométhanesulfonyl)imide (abrégé NTf₂⁻) ; les borates, notamment le tétrafluoroborate (abrégé BF₄⁻) ; les phosphates, notamment le hexafluorophosphate (abrégé PF₆⁻) ; les phosphinates et les phosphonates, notamment les alkyl-phosphonates ; les amides, notamment le dicyanamide (abrégé DCA⁻) ; les aluminates, notamment le tétrachloroaluminate (AlCl₄⁻), les halogénures (tels que les anions bromure, chlorure, iodure...), les cyanates, les acétates (CH₃COO⁻), notamment le trifluoroacétate ; les sulfonates, notamment le méthanesulfonate (CH₃SO₃⁻), le trifluorométhanesulfonate ; les sulfates, notamment l'éthyle sulfate, l'hydrogène sulfate, et leurs mélanges.

Par sel organique au sens de l'invention, on entend plus particulièrement tout sel organique stable aux températures utilisées lors de la synthèse du copolymère à blocs selon l'invention. L'homme du métier peut se reporter aux fiches techniques des sels organiques, qui indiquent la température limite de décomposition de chaque sel organique.

A titre d'exemples de sels organiques utilisables dans le cadre de l'invention, on peut citer notamment les sels organiques à base de cation ammonium, à base de cation imidazolium ou de cation imidazolinium, à base de cation pyridinium, à base de cation dihydropyridinium, à base de cation tétrahydropyridinium, à base de cation pyrrolidinium, à base de cation guanidine, à base de cation phosphonium.

Les sels organiques à base de cation ammonium associent par exemple :
- un cation N-triméthyl-N-propylammonium avec un anion bis(trifluorométhanesulfonyl)imide ;
- un cation N-triméthyl-N-butylammonium ou N-triméthyl-N-hexylammonium avec un anion choisi parmi le bromure, le tétrafluoroborate, l'hexafluorophosphate, le bis(trifluorométhanesulfonyl)imide ;
- un cation N-tributyl-N-méthylammonium avec un anion iodure, bis(trifluorométhanesulfonyl)imide, ou dicyanamide ;
- un cation tétraéthylammonium avec un anion tétrafluoroborate ;
- un cation (2-hydroxyéthyl)triméthylammonium avec un anion diméthylphosphate ;
- un cation di(2-hydroxyéthyl)ammonium avec un anion trifluoracétate ;
- un cation N,N-di(2-méthoxy)éthylammonium avec un anion sulfamate ;
- un cation N,N-diméthyl(2-hydroxyéthyl)ammonium avec un anion 2-hydroxyacétate ou trifluoroacétate ;
- un cation N-éthyl-N,N-diméthyle-2-méthoxyéthyle ammonium avec un anion bis(trifluorométhylsulfonyl)imide ;
- un cation éthyl-diméthyl-propylammonium et un anion bis(trifluorométhylsulfonyl)imide ;
- un cation méthyltrioctylammonium et un anion bis(trifluorméthylsulfonyl)imide ;
- un cation méthyltrioctylammonium et un anion trifluoroacétate ou trifluorométhylsulfonate ;
- un cation tétrabutylammonium et un anion bis(trifluorométhyl sulfonyl)imide
- un cation tétraméthylammonium et un anion bis(oxalato(2-))-borate ou tris(pentafluoroéthyl)trifluorophosphate.

On peut également citer les sels organiques à base d'imidazole, tels que les imidazoles di-substitués, les imidazoles monosubstitués, les imidazoles tri-substitués ; en particulier ceux à base de cation imidazolium ou de cation imidazolinium.

On peut citer les sels organiques à base de cation imidazolium associant par exemple :
- un cation H-méthylimidazolium avec un anion chlorure ;
- un cation 1-éthyl-3-méthylimidazolium avec un anion chlorure, bromure, tétrafluoroborate, hexafluorophosphate, trifluorométhanesulfonate, bis(trifluorométhanesulfonyl)imide, tétrachloroaluminate, éthyl-phosphonate ou méthylphosphonate, méthanesulfonate, éthyl-sulfate, éthyl-sulfonate ;
- un cation 1-butyl-3-méthylimidazolium avec un anion chlorure, bromure, tétrafluoroborate, hexafluorophosphate, trifluorométhanesulfonate, bis(trifluorométhanesulfonyl)imide, tétrachloroaluminate, acétate, hydrogène sulfate, trifluoroacétate, méthanesulfonate ;
- un cation 1,3-diméthylimidazolium avec un anion méthyl-phosphonate ;
- un cation 1-propyl-2,3-diméthylimidazolium avec un anion bis(trifluorométhanesulfonyl)imide ;
- un cation 1-butyl-2,3-diméthylimidazolium avec un anion tétrafluoroborate bis(trifluorométhanesulfonyl)imide ;
- un cation 1-hexyl-3-méthylimidazolium avec un anion tétrafluoroborate, hexafluorophosphate, bis(trifluorométhanesulfonyl)imide ;
- un cation 1-octyl-3-méthylimidazolium avec un anion bis(trifluorométhanesulfonyl)imide ;
- un cation 1-éthanol-3-méthylimidazolium avec un anion chlorure, bromure, tétrafluoroborate, hexafluorophosphate, bis(trifluorométhanesulfonyl)imide, dicyanamide ;

On peut également citer à titre d'exemples les sels organiques à base de cation pyridinium tels que: le N-butyl-3-méthylpyridinium bromure, le N-butyl-méthyle-4-pyridinium chlorure, le N-butyl-méthyle-4-pyridinium tétrafluoroborate, le N-butyl-3-méthylpyridinium chlorure, le N-butyl-3-méthylpyridinium dicyanamide, le N-butyl-3-méthylpyridinium méthylsulfate, le 1-butyl-3-méthylpyridinium tétrafluoroborate, le N-butylpyridinium chlorure, le N-butylpyridinium tétrafluoroborate, le N-butylpyridinium trifluorométhylsulfonate, le 1-éthyl-3-hydroxyméthylpyridinium éthylsulfate, le N-hexylpyridinium bis(trifluorométhylsulfonyl)imide, le N-hexylpyridinium trifluorométhansulfonate, le N-(3-hydroxypropyl)pyridinium bis(trifluorométhylsulfonyl)imide, le N-butyl-3-méthylpyridinium trifluorométhanesulfonate, le N-butyl-3-méthylpyridinium hexafluorophosphate.

On peut également citer à titre d'exemples les sels organiques à base d'un cation pyrrolidinium tels que: le butyl-1-méthyle-1-pyrrolidinium chlorure, le butyl-1-méthylepyrrolidinium dicyanamide, le butyl-1-méthyle-1-pyrrolidinium trifluorométhanesulfonate, le butyl-1-méthyle-1-pyrrolidinium tris(pentafluoroéthyl), le 1-butyl-1-méthylpyrrolidinium bis[oxalato(2-)]borate, 1-butyl-1-méthylpyrrolidinium bis(trifluorométhylsulfonyl)imide, le 1-butyl-1-méthylpyrrolidinium dicyanamide, le 1-butyl-1-méthylpyrrolidinium trifluoroacétate, le 1-butyl-1-méthylpyrrolidinium trifluorométhanesulfonate, le butyl-1-méthyl-1-pyrrolidinium tris(pentafluoroéthyl)trifluorophosphate, le 1,1-diméthylpyrrolidinium iodure, 1-(2-éthoxyéthyl)-1-méthylpyrrolidinium bis(trifluorométhylsulfonyl)imide, le 1-hexyl-1-méthylpyrrolidinium bis(trifluorométhylsulfonyl)imide, le 1-(2-méthoxyéthyle)-1-méthyl pyrrolidinium bis(trifluorométhylsulfonyl)imide, le méthyle-1-octyl-1-pyrrolidinium chlorure, le 1-butyl-1-méthylpyrrolidinium bromure.

On peut citer en outre les sels organiques associant :
- un cation 1-éthyl-1-méthylpyrrolidinium avec un anion bromure, tétrafluoroborate, hexafluorophosphate, trifluoromethanesulfonate;
- un cation 1-butyl-1-méthylpyrrolidinium avec un anion chlorure, bromure, tétrafluoroborate, hexafluorophosphate, trifluorométhanesulfonate, bis(trifluorométhanesulfonyl)imide, dicyanamide, acétate ou hydrogène sulfate ;
- un cation N-propyl-N-méthylpyrrolidinium avec un anion bis(trifluorométhanesulfonyl)imide ;
- un cation 1-méthyl-1-propylpiperidinium avec un anion bis(trifluorométhanesulfonyl)imide ;

On peut également citer, à titre d'exemples, les sels organiques à base d'un cation guanidine, tels que : le guanidine trifluorométhylsulfonate, le guanidine tris(pentafluoroéthyl)trifluoro phosphate, le hexaméthylguanidine tris(pentafluoroéthyl)trifluorophosphate.

On peut citer les sels organiques à base d'un cation phosphonium tels que le trihexyl(tétradecyl)phosphonium bis[oxalat(2-)]borate ; le trihexyl(tétradécyl)phosphonium bis(trifluorométhylsulfonyl) imide ; le trihexyl(tétradécyl)phosphonium tris(pentafluoroéthyl)trifluorophosphate.

La liste de sels organiques et de cations et anions précités pouvant entrer dans la composition des sels organiques utilisables selon l'invention, est donnée uniquement à titre d'exemples, elle n'est pas exhaustive ni limitative.

Par conséquent l'addition de tout autre sel organique est bien entendu envisageable dans le cadre de l'invention, dès l'instant que la température de décomposition du sel organique est supérieure aux températures que la composition selon l'invention est susceptible de subir.

Selon certains modes de réalisation, la composition selon l'invention comprend en outre au moins un sel inorganique, c'est-à-dire un sel de métal alcalin ou sel de métal alcalinoterreux ; parmi lesquels on peut notamment citer les sels de métaux alcalins, tels que lithium, sodium et le potassium; et ceux d'alcalino-terreux, tels que magnésium et le calcium; avec les acides organiques (mono-ou di-carboxyliques contenant 1 à 12 atomes de carbone, par exemple l'acide formique, l'acide acétique, l'acide propionique, l'acide oxalique et l'acide succinique; acides sulfoniques contenant 1 à 20 carbones, par exemple l'acide méthanesulfonique, l'acide p-toluènesulfonique et l'acide thiocyanique) ou des acides minéraux (acides halohydriques, par exemple l'acide chlorhydrique, l'acide bromhydrique, l'acide perchlorique, l'acide sulfurique et l'acide phosphorique). On peut citer l'acétate de potassium, l'acétate de lithium, le chlorure de lithium, le chlorure de magnésium, le chlorure de calcium, le bromure de sodium, le bromure de potassium, le bromure de magnésium, le perchlorate de lithium, le perchlorate de sodium, ou le perchlorate de potassium, le sulfate de potassium, le phosphate de potassium, thiocyanate de potassium, et des analogues.

Parmi eux, on préfère les halogénures, de préférence le chlorure de lithium, le chlorure de sodium, le chlorure de potassium, les acétates de potassium et les perchlorates de potassium. La quantité de sel inorganique peut généralement être de 0,001 à 3 %, et de préférence 0,01 à 2 %, par rapport au poids de la composition.

La composition selon l'invention peut en outre comprendre un ou plusieurs additifs et/ou adjuvants. Ces additifs peuvent être choisis parmi les stabilisants, les plastifiants, les lubrifiants, les charges organiques ou inorganiques, les renforts, les colorants, les pigments, les nacres, les agents antimicrobiens, les agents ignifugeants, les agents antistatiques (bien qu'il soit préféré qu'aucun agent antistatique autre que ceux mentionnés ci-dessus ne soit présent), les agents modifiant la viscosité du copolymère, les anti-oxydants, anti-UV, les retardateurs de flamme, le noir de carbone, les nanotubes de carbone, les colorants minéraux ou organiques, les pigments, les colorants, les agents de démoulage, moussants, les agents anti-choc, agents anti-retrait, les agents ignifugeants, les agents nucléants, et/ou tout autre additif ou adjuvant déjà cité et bien connu de l'homme du métier dans le domaine des polymères thermoplastiques.

Selon certains modes de réalisation, la composition de l'invention comprend en outre au moins un agent améliorant la conductivité superficielle choisi parmi : des agents hygroscopiques ; des acides gras ; des lubrifiants ; des métaux ; des pellicules métalliques ; des poudres métalliques ; des nanopoudres métalliques ; des aluminosilicates ; des amines, telles que des amines quaternaires ; des esters ; des fibres ; du noir de carbone ; des fibres de carbone ; des nanotubes de carbone ; du polyéthylène glycol ; des polymères intrinsèquement conducteurs, tels que des dérivés de polyaniline, de polythiophène, du polypyrrole ; des masterbatches ; et leurs mélanges.

La présente invention concerne également l'utilisation de la composition selon l'invention pour la fabrication d'au moins une partie des objets suivants : pièce industrielle, pièce automobile, accessoire de sécurité, enseigne, bandeau lumineux, panneau signalétique et publicitaire, présentoir, gravure, ameublement, agencement de magasin, décoration, balle de contact, prothèse dentaire, implant en ophtalmologie, membrane pour hémodialyseur, fibres optique, objet d'art, décoration, sculpture, lentilles, notamment lentilles d'appareils photo, lentilles d'appareil photo jetable, support d'impression, notamment support d'impression directe avec encres UV pour tableau photo, vitre, toit panoramique, phares de véhicules...

### EXEMPLES

Les exemples suivants illustrent l'invention sans la limiter.

Les compositions suivantes ont été préparées par mélange de polymères PMMA et de copolymères PEBA.

Les polymères PMMA utilisés sont des copolymères non issus de mélanges, sans modifiants chocs :
- PMMA 1 : est constitué avantageusement de 89% de MMA et de 11% de co-polymère d'acrylate d'ethyle (EA), dont la masse molaire est entre 70000g/mol et 80000g/mol, ayant un facteur de perte tan δ égal à 30 ;
- PMMA 2 : est constitué avantageusement de 89% de MMA et de 11% de co-polymère d'acrylate d'ethyle (EA), dont la masse molaire est entre 75000g/mol et 85000g/mol, ayant un facteur de perte tan δ égal à 15 ;
- PMMA 3 : est constitué avantageusement de 99.4% de MMA et de 0.6% de co-polymère d'acrylate d'ethyle (EA), dont masse molaire est entre 75000g/mol et 85000g/mol, ayant un facteur de perte tan δ égal à 4,6 ;
- PMMA 4 : est constitué avantageusement de 95% de MMA et de 5% de co-polymère d'acide methacrylique (MAA), dont masse molaire est entre 75000g/mol et 85000g/mol, ayant un facteur de perte tan δ égal à 3,7 ;
- PMMA 5 : est constitué avantageusement de 94% de MMA et de 6% de co-polymère d'acrylate d'ethyle (EA), dont la masse molaire est entre 110000g/mol et 120000g/mol, ayant un facteur de perte tan δ égal à 3,1.

Les polymères PEBA utilisés sont les suivants :
- PEBA 1 : PA11-PEG (40/60) avec des blocs PA 11 de masse molaire moyenne en nombre 1000 g/mol et des blocs PEG de masse molaire moyenne en nombre 1500 g/mol ;
- PEBA 2 : PA12-PEG (50/50) avec des blocs PA 12 de masse molaire moyenne en nombre 1500 g/mol et des blocs PEG de masse molaire moyenne en nombre 1500 g/mol.

Le facteur de perte tan δ du polymère PMMA a été mesuré à l'aide d'un rhéomètre oscillatoire à plateaux parallèles à 220°C, par un test de balayage en fréquence de 628 à 0.0628 rad/s avec une amplitude de déformation de 2 à 15%, avec des plateaux de 25mm de diamètre; la valeur à 1 rad/s a été prise comme référence.

Le Haze, le logarithme de la résistivité surfacique (log SR), ainsi que le point Vicat, et la résistance aux chocs ont été mesurés pour diverses compositions. Les résultats reportés dans le tableau ci-dessous.

**[Tableau 1]**

| Compositions | Haze (%) | Log SR | Résistance aux chocs (kJ/m²) | Point Vicat (°C) |
|---|---|---|---|---|
| 90 % PMMA 1 + 10 % PEBA 1 (invention) | 1,5 | 11,9 | 18,7 | 91 |
| 92 % PMMA 2 + 8 % PEBA 1 (invention) | 1,2 | 12 | 22,7 | 91 |
| 90 % PMMA 2 + 10 % PEBA 1 (invention) | 1,5 | 12 | 22 | 91 |
| 90 % PMMA 2 + 10 % PEBA 2 (invention) | 1,2 | 12 | 21,6 | 91 |
| 90 % PMMA 3 + 10 % PEBA 1 (comparatif) | 1,1 | 13,1 | 23 | 102 |
| 90 % PMMA 4 + 10 % PEBA 1 (comparatif) | 1 | 13,4 | 24,4 | 97 |
| 90 % PMMA 5 + 10 % PEBA 1 (comparatif) | 1,2 | 12,6 | 28 | 98 |
| 100 % PMMA 1 (témoin) | < 0,5 | > 14 | 18 | 93 |
| 100 % PMMA 2 (témoin) | < 0,5 | > 14 | 19 | 90 |
| 100 % PMMA 3 (témoin) | < 0,5 | > 14 | 20 | 108 |
| 100 % PMMA 4 (témoin) | < 0,5 | > 14 | 20 | 116 |
| 100 % PMMA 5 (témoin) | < 0,5 | > 14 | 22 | 101 |

Le Haze de chaque composition a été mesuré selon la norme ASTM D1003.

La résistivité surfacique a été mesurée à l'aide de l'appareil Sefelec M1500P équipé de la cellule 8009, avec les conditions suivantes :
- Ddp :40V ;
- Temps de charge avant lecture : 60sec ;
- Rapport I/d : 53.4.

Aucun conditionnement spécifique n'a été réalisé.

La résistance aux chocs a été mesurée selon la norme ISO 179/1eU.

Le Point Vicat a été mesuré selon la norme ISO 306B50.

On constate que les compositions selon l'invention :
- présentent des propriétés antistatiques ou antipoussières améliorées par rapport aux PMMA seuls ;
- présentent une résistance aux chocs améliorée par rapport aux PMMA seuls ;
- présentent de bonnes propriétés de transparence ;
- présentent de meilleures propriétés antistatiques ou antipoussières que des compositions comparatives, à taux de PEBA égal ;
- présentent une moindre altération du point Vicat vis-à-vis des PMMA seuls, en comparaison avec des compositions comparatives, à taux de PEBA égal.

## Revendications

1. Composition comprenant :
- de 85 à 98 % en poids de poly(méthacrylate de méthyle) par rapport au poids de la composition, le poly(méthacrylate de méthyle) présentant un facteur de perte tan δ, correspond au rapport des modules G" et G' mesurés à une température de 220°C et à une fréquence angulaire de 1 rad/sec, supérieur ou égale à 10 selon la norme ISO 6721-10:2015 ; et
- de 2 à 15 % en poids de copolymère à blocs polyamide et à blocs polyéther par rapport au poids de la composition.

2. Composition selon la revendication 1, dans laquelle le poly(méthacrylate de méthyle) comprend un copolymère de méthyl métacrylate (MMA).

3. Composition selon la revendication 2, dans laquelle, le copolymère de MMA comprend de 60 % à 99,7 % en poids de MMA et de 0,3 à 40 % en poids d'au moins un monomère contenant au moins une insaturation éthylénique pouvant copolymériser avec le MMA.

4. Composition selon la revendication 1, dans laquelle le copolymère à blocs polyamide et à blocs polyéther comprend du polyéthylène glycol (PEG), en particulier de 50 à 80 % en poids de PEG, par rapport au poids du copolymère.

5. Composition selon la revendication 4, dans laquelle le copolymère à blocs polyamide et à blocs polyéther comprend en outre au moins un polyéther autre que le polyéthylène glycol (PEG), choisi parmi le propylène glycol (PPG), le polytriméthylène glycol (PO3G), le polytétraméthylène glycol (PTMG) et leurs mélanges.

6. Composition selon l'une des revendications 1, 4 ou 5, dans laquelle les blocs polyamides (PA) du copolymère à blocs polyamides et à blocs polyéthers sont choisis parmi les blocs de polyamide (PA) suivants: 6, 11, 12, 5.4, 5.9, 5.10, 5.12, 5.13, 5.14, 5.16, 5.18, 5.36, 6.4, 6.9, 6.10, 6.12, 6.13, 6.14, 6.16, 6.18, 6.36, 10.4, 10.9, 10.10, 10.12, 10.13, 10.14, 10.16, 10.18, 10.36, 10.T, 12.4, 12.9, 12.10, 12.12, 12.13, 12.14, 12.16, 12.18, 12.36, 12.T et leurs mélanges ou copolymères.

7. Composition selon l'une des revendications 1, 4 à 6, dans laquelle les blocs polyamides du copolymère à blocs polyamides et à blocs polyéthers comprennent au moins 30 %, de préférence au moins 50 %, de préférence au moins 75 %, de préférence 100 %, en poids de PA 11 ou PA 12 sur le poids total de blocs polyamide.

8. Composition selon la revendication 1, dans laquelle le copolymère à blocs polyamide et à blocs polyéther est choisi parmi les copolymères : PA 6-PEG, PA 11-PEG, PA 12-PEG, PA 10.10-PEG, PA 10.12-PEG, PA 6.12-PEG et leurs mélanges.

9. Composition selon l'une des revendications 1 à 8, qui est dépourvue de sel organique.

10. Utilisation de la composition selon l'une quelconque des revendications 1 à 9 pour la fabrication d'au moins une partie des objets suivants : pièce industrielle, pièce automobile, accessoire de sécurité, enseigne, bandeau lumineux, panneau signalétique et publicitaire, présentoir, gravure, ameublement, agencement de magasin, décoration, balle de contact, prothèse dentaire, implant en ophtalmologie, membrane pour hémodialyseur, fibres optique, objet d'art, sculpture, lentilles d'appareils photo, lentilles d'appareil photo jetable, support d'impression, notamment support d'impression directe avec encres UV pour tableau photo, vitre, toit panoramique.

## Patentansprüche

1. Zusammensetzung, umfassend:
- 85 bis 98 Gew.-% Poly(methylmethacrylat), bezogen auf das Gewicht der Zusammensetzung, wobei das Poly(methylmethacrylat) einen Verlustfaktor tan δ, der dem Verhältnis der bei einer Temperatur von 220°C und einer Winkelfrequenz von 1 rad/s gemessenen Module G" und G' entspricht, größer oder gleich 10 gemäß ISO 6721-10:2015 aufweist; und
- 2 bis 15 Gew.-% Copolymer mit Polyamidblöcken und Polyetherblöcken, bezogen auf das Gewicht der Zusammensetzung.

2. Zusammensetzung nach Anspruch 1, wobei das Poly(methylmethacrylat) ein Methylmethacrylat(MMA)-Copolymer umfasst.

3. Zusammensetzung nach Anspruch 2, wobei das MMA-Copolymer 60 bis 99,7 Gew.-% MMA und 0,3 bis 40 Gew.-% mindestens eines Monomers mit mindestens einer ethylenischen Ungesättigtheit, das mit MMA copolymerisieren kann, umfasst.

4. Zusammensetzung nach Anspruch 1, wobei das Copolymer mit Polyamidblöcken und Polyetherblöcken Polyethylenglykol (PEG), insbesondere 50 bis 80 Gew.-% PEG, bezogen auf das Gewicht des Copolymers, umfasst.

5. Zusammensetzung nach Anspruch 4, wobei das Copolymer mit Polyamidblöcken und Polyetherblöcken außerdem mindestens einen anderen Polyether als Polyethylenglykol (PEG) umfasst, der aus Propylenglykol (PPG), Polytrimethylenglykol (PO3G), Polytetramethylenglykol (PTMG) und Mischungen davon ausgewählt ist.

6. Zusammensetzung nach einem der Ansprüche 1, 4 und 5, wobei die Polyamid(PA)-Blöcke des Copolymers mit Polyamidblöcken und Polyetherblöcken aus den folgenden Polyamid(PA)-Blöcken ausgewählt sind: 6, 11, 12, 5.4, 5.9, 5.10, 5.12, 5.13, 5.14, 5.16, 5.18, 5.36, 6.4, 6.9, 6.10, 6.12, 6.13, 6.14, 6.16, 6.18, 6.36, 10.4, 10.9, 10.10, 10.12, 10.13, 10.14, 10.16, 10.18, 10.36, 10.T, 12.4, 12.9, 12.10, 12.12, 12.13, 12.14, 12.16, 12.18, 12.36, 12.T und Mischungen oder Copolymeren davon.

7. Zusammensetzung nach einem der Ansprüche 1, 4 bis 6, wobei die Polyamidblöcke des Copolymers mit Polyamidblöcken und Polyetherblöcken mindestens 30 Gew.-%, vorzugsweise mindestens 50 Gew.-%, vorzugsweise mindestens 75 Gew.-%, vorzugsweise 100 Gew.-%, PA 11 oder PA 12, bezogen auf das Gesamtgewicht der Polyamidblöcke, umfassen.

8. Zusammensetzung nach Anspruch 1, wobei das Copolymer mit Polyamidblöcken und Polyetherblöcken aus den folgenden Copolymeren ausgewählt ist: PA 6-PEG, PA 11-PEG, PA 12-PEG, PA 10.10-PEG, PA 10.12-PEG, PA 6.12-PEG und Mischungen davon.

9. Zusammensetzung nach einem der Ansprüche 1 bis 8, die frei von organischem Salz ist.

10. Verwendung der Zusammensetzung nach einem der Ansprüche 1 bis 9 zur Herstellung von mindestens einem Teil der folgenden Gegenstände: Industrieteil, Automobilteil, Sicherheitszubehör, Schild, Leuchtband, Hinweis- und Werbetafeln, Verkaufsständer, Gravur, Möbel, Ladeneinrichtung, Dekoration, Kontaktkugel, Zahnprothese, ophthalmologisches Implantat, Membran für Hämodialysegerät, Lichtleitfasern, Kunstgegenstand, Skulptur, Linsen von Fotoapparaten, Linsen von Einwegfotoapparaten, Druckträgern, insbesondere Trägern für den Direktdruck mit UV-Druckfarben für Fotoplatten, Fensterscheibe, Panoramadach.

## Claims

1. Composition comprising:
- from 85% to 98% by weight of poly(methyl methacrylate), relative to the weight of the composition, the poly(methyl methacrylate) having a loss factor tan δ, which is the ratio of the moduli G" and G' measured at a temperature of 220°C and an angular frequency of 1 rad/sec, greater than or equal to 10 according to the standard ISO 6721-10:2015; and
- from 2% to 15% by weight of copolymer containing polyamide blocks and polyether blocks, relative to the weight of the composition.

2. Composition according to Claim 1, in which the poly(methyl methacrylate) comprises a methyl methacrylate (MMA) copolymer.

3. Composition according to Claim 2, in which the MMA copolymer comprises from 60% to 99.7% by weight of MMA and from 0.3% to 40% by weight of at least one monomer containing at least one ethylenic unsaturation that can copolymerize with MMA.

4. Composition according to Claim 1, in which the copolymer containing polyamide blocks and polyether blocks comprises polyethylene glycol (PEG), in particular from 50% to 80% by weight of PEG, relative to the weight of the copolymer.

5. Composition according to Claim 4, in which the copolymer containing polyamide blocks and polyether blocks also comprises at least one polyether other than polyethylene glycol (PEG), chosen from propylene glycol (PPG), polytrimethylene glycol (PO3G), polytetramethylene glycol (PTMG) and mixtures thereof.

6. Composition according to one of Claims 1, 4 or 5, in which the polyamide (PA) blocks of the copolymer containing polyamide blocks and polyether blocks are chosen from the following polyamide (PA) blocks: 6, 11, 12, 5.4, 5.9, 5.10, 5.12, 5.13, 5.14, 5.16, 5.18, 5.36, 6.4, 6.9, 6.10, 6.12, 6.13, 6.14, 6.16, 6.18, 6.36, 10.4, 10.9, 10.10, 10.12, 10.13, 10.14, 10.16, 10.18, 10.36, 10.T, 12.4, 12.9, 12.10, 12.12, 12.13, 12.14, 12.16, 12.18, 12.36, 12.T and mixtures or copolymers thereof.

7. Composition according to one of Claims 1 and 4 to 6, in which the polyamide blocks of the copolymer containing polyamide blocks and polyether blocks comprise at least 30%, preferably at least 50%, preferably at least 75%, preferably 100%, by weight of PA 11 or PA 12, relative to the total weight of polyamide blocks.

8. Composition according to Claim 1, in which the copolymer containing polyamide blocks and polyether blocks is chosen from the following copolymers: PA 6-PEG, PA 11-PEG, PA 12-PEG, PA 10.10-PEG, PA 10.12-PEG, PA 6.12-PEG and mixtures thereof.

9. Composition according to one of Claims 1 to 8, which is free of organic salt.

10. Use of the composition according to any one of Claims 1 to 9, for the manufacture of at least a part of the following objects: industrial part, automotive part, safety accessory, sign, illuminated banner, signpost and advertising panel, display, engraving, furniture, store fitting, decoration, contact ball, dental prosthesis, ophthalmic implant, membrane for haemodialysis, optical fibres, art object, sculpture, camera lenses, disposable camera lenses, printing medium, notably a medium for direct printing with UV inks for photo board, window, panoramic roof.
